Europäisches Patentamt

European Patent Office

Office européen des brevets

(19)

(11) **EP 0 538 932 B1**

(12) **EUROPEAN PATENT SPECIFICATION**

(45) Date of publication and mention
of the grant of the patent:
**29.04.1998 Bulletin 1998/18**

(51) Int Cl.$^6$: **G01N 15/02**

(21) Application number: **92203068.9**

(22) Date of filing: **06.10.1992**

(54) **Method for determining equivalent hydrodynamic granulometry and possibly from that granular differentiation, and device used with it**

Verfahren zur Ermittlung der äquivalenten hydrodynamischen Körnung, gegebenenfalls die Körnerdifferenzierung aus der Körnung und Vorrichtung hierfür

Procédé pour déterminer la granulométrie hydrodynamique équivalente, éventuellement la différentiation granulaire à partir de cette granulométrie et dispositif pour la mise en oeuvre du procédé

(84) Designated Contracting States:
**BE DE FR GB NL**

(30) Priority: **21.10.1991 BE 9100973**

(43) Date of publication of application:
**28.04.1993 Bulletin 1993/17**

(73) Proprietor: **VLAAMSE INSTELLING VOOR TECHNOLOGISCH ONDERZOEK, afgekort V.I.T.O., onderneming van openbaar nut onder de vorm van een n.v. 2400 Mol (BE)**

(72) Inventors:
• **Carpels, Mark B-2400 Mol (BE)**
• **Geuzens, Pierre B-3960 Bree (BE)**

• **Rymen, Theo B-2490 Balen (BE)**

(74) Representative: **Debrabandere, René Bureau De Rycker nv Arenbergstraat 13 2000 Antwerpen (BE)**

(56) References cited:
• **REVUE DE L'INDUSTRIE MINERALE vol. 53, no. 4, April 1971, pages 268 - 284 V. FORMANEK ET AL. 'DESCRIPTION DES METHODES D'ANALYSE GRANULOMETRIQUES'**
• **CONTROL & INSTRUMENTATION December 1974, pages 42 - 47 WOOD 'MEASURING ON STREAM PARTICLE SIZE AND SIZE DISTRIBUTION'**

# EP 0 538 932 B1

## Description

The invention relates to a method of determining the equivalent hydrodynamic granulometry of a material by means of hydro-cyclone separation, according to which method a suspension of the material from a receptacle is added to a hydro-cyclone with an upperflow pipe and an underflow pipe.

Knowing the hydrodynamic granulometry or granule size distribution of a material such as earth is necessary for quantifying physical separation techniques and in case of need the choice of apparatus used for that purpose such as the hydro-cyclone, the floatation tank or the upward flow column.

Such physical separation techniques are among others applied for the treatment of polluted soils with the objective of reducing the amount of material to be dumped. Such applications are of course only significant if the pollutions are heterogeneously distributed over the granule size fractions, which is usually the case. Coarse granules are, in view of their physicochemical properties generally less heavily polluted than finer granules. Through physical separation, for example in a hydro-cyclone, the heavily polluted fine fraction can be separated from the purer coarse fraction.

The distribution of the pollutants over the various granule size fractions, this is the granular differentiation, can be determined starting from the granulometry and analyses of the pollutants.

The classic manner for determining granulometry and granular differentiation consists in placing a sample of the material in a sieving tower and weighing the various granular fractions obtained and, for the differentiation, analyzing for pollutants. This method only gives a limited number of relevant granular fractions, which is insufficient for obtaining a technically usable picture. How the pollutants behave has to be estimated roughly. The measured sieve diameter is also not a good measure for the hydrodynamic diameter of a particle. The separation techniques such as hydro-cyclonage are however quantified according to this hydrodynamic diameter. Only when the particle is perfectly spherical and always has the same density, is the hydrodynamic diameter of the particle equal to the sieve diameter. Light but large particles which are heavily polluted, for example wood, will lead to heavy contamination of the coarse fraction during the sieve analysis, while in a hydro-cyclone these particles will be found back with the fine fraction. For heavy small particles such as ores the opposite will occur. Agglomerates of fine strongly polluted particles will with the sieving end up in the coarse fraction, while by breaking up these agglomerates in a hydro-cyclone the particles will pass to the fine fraction. This classic method consequently gives no usable hydrodynamic granulometry or granular differentiation.

That is why consideration was given to determining granule size distribution and granular differentiation with a technique which uses the same parameters as those on which the separation technique is based, namely by means of hydro-cyclone separation. The granulometry which is measured is then indeed an equivalent, this means reference is made to a standard material, namely this material for which the cyclone manufacturer gives the Gx-curve, and gives the granule size distribution of such a material to which the behaviour of the material to be measured is equivalent. The Gx-curve gives the probability that a particle with granule size x is in the underflow of the hydro-cyclone and depends on the construction of the hydro-cyclone and the material utilised. Gx-values for a standard material are given by the manufacturer. This standard material is usually sand, and the particles to be measured behave as sand with a specific granule size distribution which is equivalent to, but does differ from, the actual granule size distribution of the material to be measured. The use of an equivalent granulometry however offers no disadvantage for the intended purpose, namely the assessment of the possibility of physical separation and the choice and quantification of the apparatus for that purpose.

A known method of this type is the so-called "fingerprint" method, which is described amongst others in "Revue de l'Industrie Minerale", vol. 53, no 4, April 1971, V.Formanek et al. "Description des méthodes d'analyses granulométriques", pages 280 to 283. According to this method a mixture of the material and liquid is fed to a first hydro-cyclone, the upperflow thereof to a second hydro-cyclone, the upperflow of this second hydro-cyclone to a third hydro-cyclone and so on, while the amount of dry matter and the concentration of specific pollutants are determined from the underflow of each hydro-cyclone. By combining the granule size distribution and the mass balance for the products a view can be obtained of the pollutant distribution. It can be determined in which underflows or granule size fractions specific pollutants are especially found.

Because of the fact that the hydro-cyclones utilised, usually about five, are not "ideal" a number of particles will however end up in the wrong granule size fraction with each hydro-cyclone. The more hydro-cyclones, the greater the wrong classification and the more inaccurate the method. A minimum number of hydro-cyclones is required in order to generate sufficient fractions. Not only is this method not very accurate, but the device which is required for the application thereof, is rather laborious and expensive. The sequential separation with a series of hydro-cyclones must for that matter be supplemented by additional gravity separations.

The invention is intended to remedy these disadvantages and to provide a method for determining equivalent hydrodynamic granulometry, which is not only simple but especially accurate and can moreover be performed with a relatively inexpensive device.

For this purpose only one single hydro-cyclone is used of which the underflow is recycled to the receptacle, a well-defined sample volume is removed from the upper course at well-defined intervals, the samples taken are dried and weighed, and the granulometry is calculated from the total solid mass supplied to the receptacle during the sampling, the mass balance of each sample and the probability that a particle with granule size x is in the underflow as represented by the G(x) curve of the hydro-cyclone for the specific material.

By measuring in each sample the amounts of at least one constituent, in particular a pollutant, the granular differentiation for this constituent can also subsequently be calculated starting with these amounts and the calculated granulometry.

The invention consequently also relates to a method for determining granular differentiation of a constituent in a material, characterised in that the granulometry is calculated according to the aforementioned method, the amounts of the constituent in the samples taken are measured and starting with these amounts and the granulometry the granular differentiation for this constituent is calculated.

In contrast to the known method with sequential hydro-cyclone separation whereby the hydro-cyclones must be as ideal as possible, the sole hydro-cyclone does not have to be ideal. Conversely, the method according to the invention on the contrary makes use of the imperfection of the hydro-cyclone and the Gx-curve must consequently be as bad as possible, this means be sufficiently flat. Obviously the hydro-cyclone must be so chosen that this Gx-curve sufficiently overlaps the area of the granule size of which the distribution is to be known.

The invention also relates to a device obviously destined to be utilised for implementing the method according to any of the preceding embodiments.

The invention consequently relates to a device for determining equivalent hydrodynamic granulometry, respectively granular differentiation, comprising a receptacle for a suspension of the material to be measured in liquid, a hydro-cyclone with a specific Gx-curve, an upperflow pipe and an underflow pipe, and a supply pipe between the receptacle and the inlet of the hydro-cyclone, characterised in that it comprises a single hydro-cyclone, of which the underflow pipe is connected to the receptacle and means for taking samples from the upperflow at known intervals and means for calculating the granulometry on the basis of the amount of solid matter in the samples and the Gx-curve.

The device can furthermore comprise means in order to determine the amounts of a constituent in the samples and means for calculating the granular differentiation for this constituent in the material starting with the granulometry and these amounts.

Other details and advantages of the invention will appear from the following description of a method for determining equivalent hydrodynamic granulometry and possibly from that granular differentiation, and of a device used with it, according to the invention. This description is only given as an example and does not restrict the invention. The reference figures relate to the drawings attached hereto, in which:

Figure 1 shows a schematic representation of a device for determining granulometry and granular differentiation according to the invention;

figure 2 shows the Gx-curve of the hydro-cyclone from the device from figure 1;

figure 3 shows the measured dry matter concentrations of the samples in function of time;

figure 4 shows the measured concentrations of zinc in the samples taken;

figure 5 shows the calculated granulometry in graphic form;

figure 6 shows the calculated granular differentiation of zinc in graphic form.

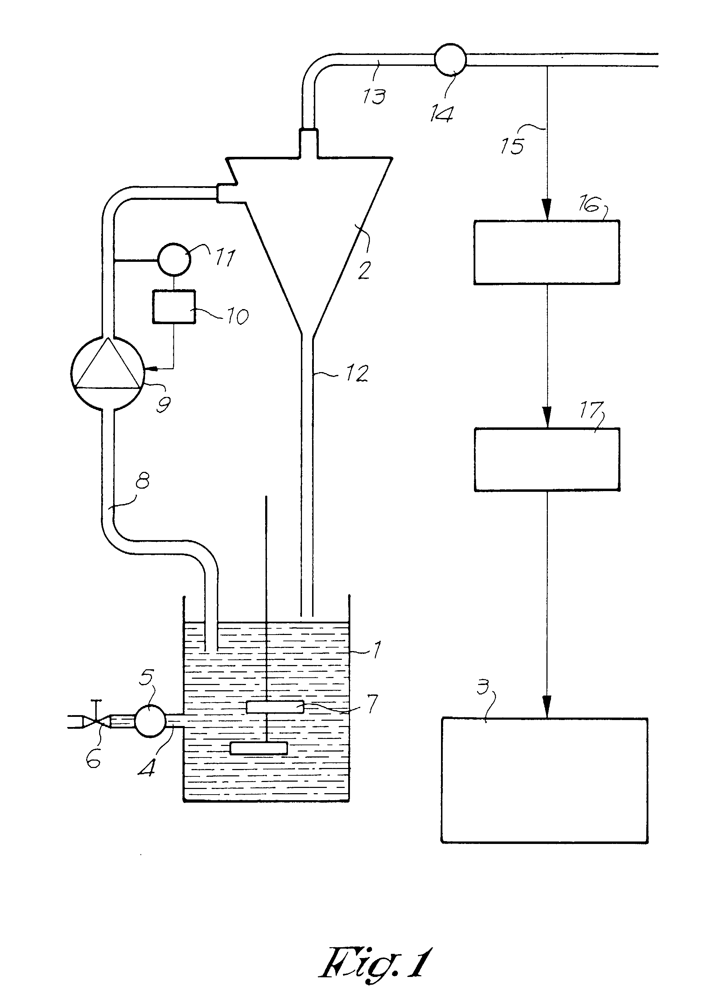

The device shown in figure 1 essentially comprises a mixing tank 1 with known volume, a hydro-cyclone 2 and a computing unit 3.

A water supply pipe 4 in which a flow meter 5 and a tap 6 are mounted is connected to the mixing tank 1. The size of the mixing tank 1 is so chosen that there is sufficient solid matter present in the device in order to allow the necessary samples to be taken during the necessary time span. A stirring mechanism 7 is disposed in the mixing tank 1. The mixing tank is connected to the inlet of the hydro-cyclone 2 by means of a supply pipe 8 in which a pump 9 is mounted. The pump 9 is controlled by a regulating device 10 in function of the pressure in the supply pipe 8 which is measured between the pump 9 and the hydro-cyclone 2 by a pressure meter 11, so that the flow supplied to the inlet of the hydro-cyclone, characterised by the drop in pressure, is as constant as possible.

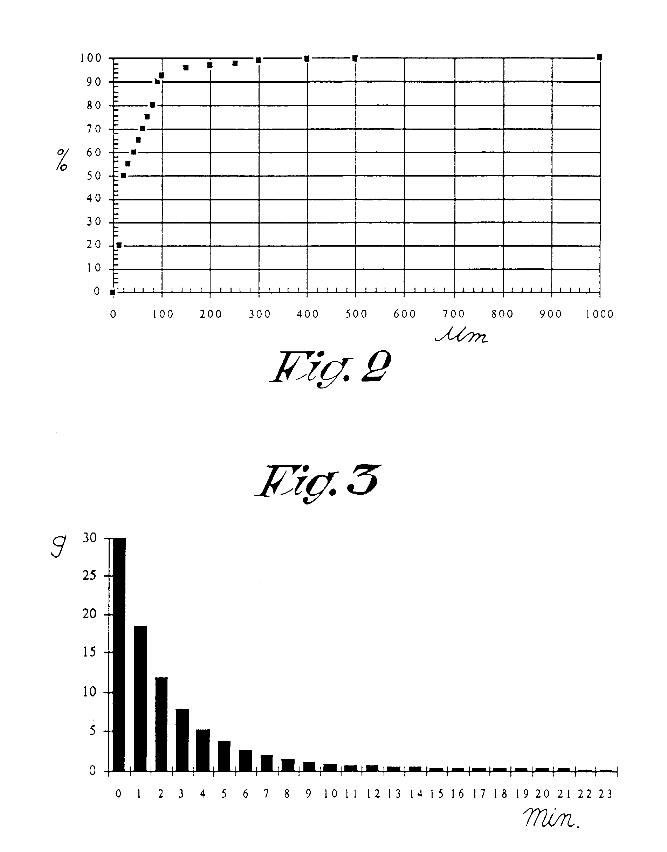

This hydro-cyclone is characterised by a Gx-curve which overlaps the expected area of granule sizes but which is not ideal and is therefore rather flat. Such a Gx-curve is shown in figure 2. The Gx (Grade efficiency) is the probability, expressed in %, which a particle with a specific granule size x expressed in micrometres has of ending up in the underflow pipe 12 of the hydro-cyclone. This underflow pipe 12 flows out in the mixing tank 1. The time spent by the particles in the underflow pipe 12 could give a distorted view of the granulometry if it turns out to be too low.

The upperflow pipe 13 of the hydro-cyclone 2 is provided with a flow meter 14 and a tapping device 15 for taking samples. For taking samples an automatic device is provided which draws off a well-defined amount of suspension from the upperflow pipe 13 at regular intervals. This tapping device 15 exits in a drying device 16. The dry matter can be weighed in the weighing device 17.

The computing unit 3 is a microprocessor which is so programmed that starting with the values from the flow meters 5 and 14, the flow of suspension supplied by the pump 9, the mass of material placed in the mixing tank 1, the volume of the mixing tank 1, the volumes of the samples, the mass of dry matter in the samples taken and the Gx-curve of the hydro-cyclone it can calculate the granulometry and further from that and from the concentration of pollutant can calculate the granular differentiation.

The device is used as follows:

A well-defined mass of the material to be measured, of which the average concentration of one or more pollutants, for example zinc, has previously been determined, is placed in the mixing tank 1 and the tap 6 is opened. With the stirring device 7 the material is mixed with a well-defined flow of water which flows via the water supply pipe 4 into the mixing tank 1. During the whole time that samples are taken, the stirring mechanism 7 must be in operation in order to obtain an ideal mixture and to avoid the sedimentation of the coarser particles.

At regulated intervals a well-defined sample amount, namely a well-defined volume of suspension, is removed from the upperflow pipe 13. The ratio of the flow which is tapped off during the taking of samples and the upperflow is measured. The samples taken are dried in the drying device 16 and the dry matter is weighed with the weighing device 17. At the same time the concentration in the dry matter from each sample of one or more pollutant such as for example zinc is determined.

Because of the fact that the underflow is constantly recycled a type of eluviate phenomenon develops whereby according to the Gx-curve at the start of the measurement comparatively especially fine granules appear in the upperflow and after a time relatively more coarse granules are present in the upperflow. The coarse granules therefore remain longer in the device than the finer ones and the dry matter content in the upperflow in function of time is consequently characteristic for granulometry.

The Gx-curve is not only dependent on the construction of the hydro-cyclone, but also on the material itself which is separated. The form, size and density of the granules also determine their behaviour in the hydro-cyclone and the Gx-curve will be different for every type of sludge. The manufacturer gives the Gx-curve for one or more standard materials, for example quartz sand with density 2600. The determination of the Gx-curve for the specific material of which the granulometry has to be determined would be time-consuming and is apart from that not necessary. The standard Gx-curves are used and the material tested against them.

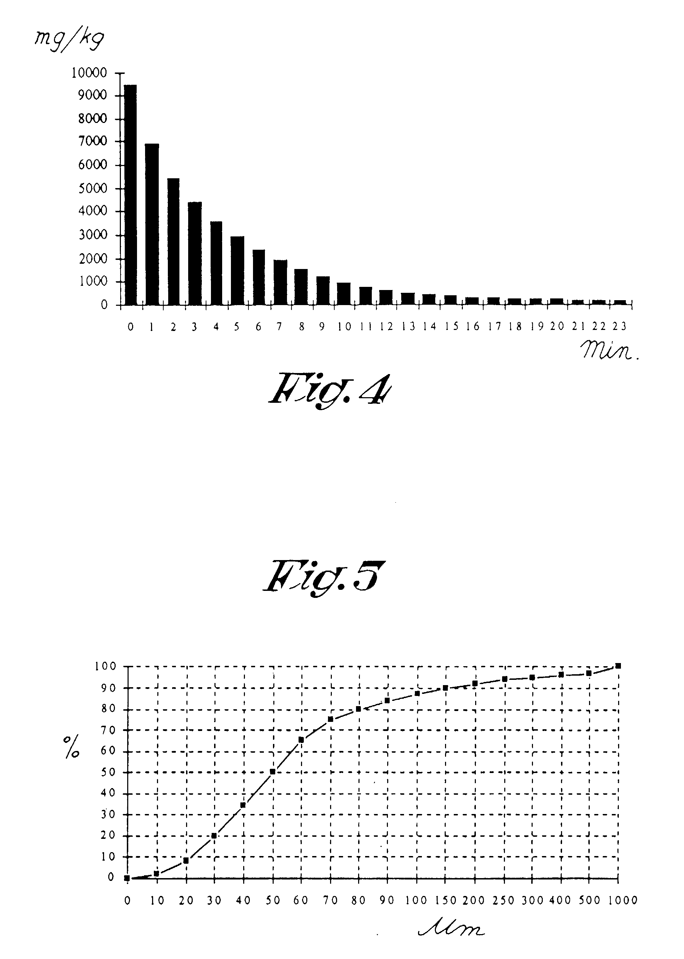

In figure 3 is shown the mass of dry matter in grams from 24 samples taken one after the other in function of time. A sample was taken every minute.

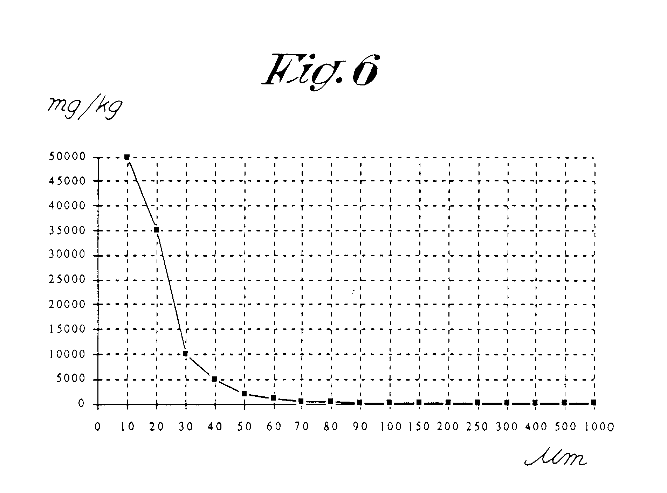

In figure 4 is shown the concentration of zinc in mg/kg in each of these samples.

The zinc concentration in the dry matter from the upperflow is at any time a function of the granule size distribution at that time. By the form of the graph from figure 4 it can already be deduced beforehand, without further calculations, how great the granular differentiation is and whether or not it roughly satisfies the expectations. The higher the zinc concentration in the first samples and the faster these decrease, the greater the bond of the zinc to the fine granular fraction.

After taking samples the remaining mass of the material in the mixing tank 1 to be measured and the concentration of polluting zinc therein are determined.

An arbitrary subdivision is made in granulometric classes or fractions, namely the fractions of granule size x1 to granule size x2, the fraction from granule size x2 to granule size x3 etc.

The value G(xi) of the Gx-curve is determined, which is given by the manufacturer under the form of various Gx values for different granule sizes, over the area with granule sizes xi to x(i+1). It is assumed that between two experimental Gx-values the Gx-curve progresses linearly. The granule size xi which is used for further calculation is then equal to 0.5(xi+x(i+1)).

Gxi is the function: A + Bxi, whereby A is a constant.

The interpolated or average Gx-value is then shown by the equation:

$$G_{(x_g)} = \frac{\displaystyle\int_{x_i}^{x_g}(A + Bx)\,dx + \int_{x_g}^{x_{i+1}}(A + Bx)\,dx}{x_i - x_{(i+1)}} \qquad (1)$$

A continuous function to which the Gx will be gauged can also be assumed.

The preceding calculation is made once for a test or even once for various tests in so far the same granule size fractions are chosen which are of interest.

Taking these Gx-values into account the total mass balance is determined for the mixing tank 1 with volume V in litres in function of time.

This balance can be written as follows:

$$m(x)(Q_{in}+Q_r) + V\, dm(x)/dt = m_r(x)Q_r \qquad (2)$$

in which:

$Q_{in}$ is the water flow in l/s supplied to the mixing tank,

$Q_r$ is the flow in l/s of the underflow,

$m(x)$ is the mass of dry matter in the mixing tank in g per litre for the granule size x,

$m_r(x)$ is the mass of dry matter in g per litre in the underflow for granule size x.

The amount (flow times mass in g/l) in the under course for granule size x is, since G(x) gives the probability that a granule with size x reaches the underflow:

$$m_r(x)Q_r = (Q_{in}+Q_r)m(x)G(x). \qquad (3)$$

$$Vdm(x)/dt = (Q_{in}+Q_r)(G(x)-1)m(x). \qquad (4)$$

Per definition is chosen: $kx= (Q_{in}+Q_r)(1/V)(1-G(x))$

When t=0 then $m(x) = m_0(x)$, this is the initial mass in g/l for granule size x and is sought.

Consequently the mass varies for a specific granule size in the mixing tank in function of time t as follows:

$$m(t,x) = m_0(x)e^{-kxt} \qquad (5)$$

With $m_b$ the mass in the upperflow in grams per litre and $Q_{out}$ the flow in 1/s in the upperflow, the following is then valid for the upperflow:

$$m_b(x)Q_{out} = m(x)(Q_{in}+Q_r) - m_r(x)Q_r \qquad (6)$$

or in function of the initial mass

$$m_b(x,t) = m_0(x)(Q_{in}+Q_r)(1/Q_{out})(1-G(x))e^{-kxt} \qquad (7)$$

The total amount of solid matter $M_x$ supplied through out the time and therefore at the end $t_e$ of the test is then:

$$M_x(t_e) \;=\; \int_0^{t_e} m_b(x) \cdot Q_{out}\, dt$$

or

$$M_x(t_e) = m_0(x)\,V(1-e^{-kxt_e}) \qquad (8)$$

From the progress of $m_b(x,t)$ the initial amount of dry matter $m_0(x)$ with granule size x in the mixing tank can be calculated.

All these calculations give the granule distribution over the desired area.

The mass balance is now also made for each sample. The ratio between tne mass of dry matter $\overline{m}_b(t_i)$ in g/l and the sample volume $V_s$ in litres taken at a moment $t_i$ can be shown as follows:

$$\overline{m}_b(t_i)a/V_s = \overline{m}_b(t_i) \qquad (9)$$

in which a is the ratio between the amount of sample in l/s $Q_s$ and $Q_{out}$ and the time ti is the starting time $t_{s0}$ of a i-de sample-taking increased by half the duration time $t_s$ of the sample-taking itself.

In a first rough calculation it is accepted that no variation in granule size distribution occurs during the taking of samples.

Over the sample-taking at $t_1$, $t_2$ ... $t_e$ the following balances are valid for the granule size fractions x1, x2 ...:

$$m_b(t_1)=m_0(x1)(Q_{in}+Q_r)(1/Q_{in})(1-Gx1)e^{-k1t1}$$
$$+\,m_0(x2)(Q_{in}+Q_r)(1/Q_{in})(1-Gx2)\,e^{-k2t1} + ...$$
$$+\,m_0(xn)(Q_{in}+Q_r)(1/Q_{in})(1-Gxn)\,e^{-knt1} \qquad (10)$$

$$m_b(t_2)=m_0(x1)(Q_{in}+Q_r)(1/Q_{in})(1-Gx1)\,e^{-k1t2}$$
$$+\,m_0(x2)(Q_{in}+Q_r)(1/Q_{in})(1-Gx2)\,e^{-k2t2} + ...$$
$$+\,m_0(xn)(Q_{in}+Q_r)(1/Q_{in})(1-Gxn)\,e^{-knt2} \qquad (11)$$

$$m_b(t_e)=m_0(x1)(Q_{in}+Q_r)(1/Q_{in})(1-Gx1)\,e^{-k1te}$$
$$+\,m_0(x2)(Q_{in}+Q_r)(1/Q_{in})(1-Gx2)\,e^{-k2te} + ...$$
$$+\,m_0(xn)(Q_{in}+Q_r)(1/Q_{in})(1-Gxn)\,e^{-knte} \qquad (12)$$

in which Gx1, Gx2 ... are the Gx-values for the various granule sizes, which values are determined on a curve obtained by experimentally determined Gx points to be connected to each other linearly.

The mass $M_t$ disappeared from the upper course is equal to the initial mass $M_0$ decreased by the remaining mass $M_r$ which remains in the device at the end of the sample-taking and is calculated according to the following equation:

$$M_t = m_0(x1)V(1-e^{-k1te}) + m_0(x2)V(1-e^{-k2te}) + ...$$
$$m_0(xn)V(1-e^{-knte}) \qquad (13)$$

In order to take measurement errors into account a least squares rough calculation can be applied to the masses which are in the granule size classes.

From that a granule size distribution is obtained (% of granules in function of the granule size in micrometres) as shown in figure 5.

Utilising the calculated granulometry $m_b(xi)$, and the measured concentration of zinc in the initial material and in each sample, the granular differentiation for the zinc can be calculated in a similar manner, with the following equations:

$$m(ti)\,C(ti)\ =\ \sum_{j}(xj,ti)\,C(xj) \qquad\qquad (14)$$

over each sample-taking ti, this is the pollutant at the moment ti is equal to the sum over all granule sizes of the masses which are in the granule size xj (xj is the granular size of sample j taken at time ti) multiplied by the concentration of pollutant in that granule size.

$$M_{t}C_{T} =\sum_{j}\int_{0}^{te} m\,(xj)\,dt\,C(xj) \qquad\qquad (15)$$

in which:

C(ti) is the ratio mass of pollutant zinc to mass of dry matter in sample i,
$C_T$ is the total mass of the pollutant in the material placed in the mixing tank.

In order to take errors into account, the least squares method can be applied. In contrast to the granulometry calculation, iteration is not necessary here, because no pattern is postulated.

The calculated granular differentiation for zinc is shown in figure 6.

The information obtained can now be employed for the evaluation of applying it to a physical separation, in particular hydro-cyclonage, on the material of which the granulometry has been determined.

The yield from the under flow in relation to the remaining pollution in the purified fraction can be determined. A compromise is then sought between the mass yield of the pure material, which decreases the dumping costs, and the remaining concentration thereof which is an ecologic subject.

The optimum hydro-cyclone is determined by the remaining pollution, this is the amount of zinc in the under course, measured in function of the cut off diameter, this is the diameter where Gx = 50%.

On the basis of the optimum cut off diameter and the Gx information from the supplier the most suitable hydro-cyclone can now be sought in order to approach the optimum separation as much as possible.

The final evaluation of the feasibility of physical separation takes into account the treatment costs, the dumping costs of the polluted fraction and the possible yield from reuse of the pure under course.

The above described methods are rather simple and accurate and require only a simple and relatively inexpensive device.

The present invention is in no way restricted to the embodiments described above, and within the scope of the present patent application many changes can be applied to these embodiments.

## Claims

1. Method of determining the equivalent hydrodynamic granulometry of a material by means of hydro-cyclone separation, according to which method a suspension of the material from a receptacle (1) is added to a hydro-cyclone (2) with an upperflow pipe (13) and an underflow pipe (12), characterised in that only one single hydro-cyclone (2) is used of which the underflow is recycled to the receptacle (1), a well-defined sample volume is removed from the upperflow at well-defined intervals, the samples taken are dried and weighed, and the granulometry is calculated from the total solid mass supplied to the receptacle during the sampling, the mass balance of each sample and the probability that a particle with granule size x is in the underflow as represented by the G(x) curve of the hydro-cyclone for the specific material.

2. Method according to claim 1, characterized in that the granulometry is calculated according the following equation:

$$M_x(t_e) = m_0(x)V(1-e^{-kxt_e}),$$

wherein: $kx = (Q_{in}+Q_r)(1/V)(1-G(x))$, and,

$M_x(t_e)$     is the total mass of solid matter supplied to the receptacle throughout the time of sampling and thus at the end of the test,

$m_0(x)$     is the sought initial mass of dry matter with granule size x in the receptacle

V     is the volume of the receptacle

$Q_{in}$     is the water flow supplied to the mixing tank,

$Q_r$     is the flow in the underflow pipe.

3.   Method of determining granular differentiation of a constituent in a material, this is the distribution of this constituent over the various granule size fractions, characterised in that the granulometry is calculated according to the method from either one of the preceding claims, the amounts of this constituent in the samples taken are measured and starting with these amounts and the granulometry the granular differentiation for this constituent is calculated.

4.   Method according to either of the preceding claims, characterised in that the granulometry is calculated by drawing up a mass balance for the receptacle (1) and by drawing up a mass balance for each sample.

5.   Device for implementing the method according to any one of the preceding claims, comprising a receptacle (1) for a mixture of the material to be measured and liquid, a hydro-cyclone (2) with a specific Gx-curve, an upperflow pipe (13) and an underflow pipe (12), and a supply pipe (8) between the receptacle (1) and the inlet of the hydro-cyclone (2), characterised in that it comprises a single hydro-cyclone (2), of which the underflow pipe (12) is connected to the receptacle (1) and means for taking samples from the upperflow at known intervals and means (3) for calculating the granulometry on the basis of the amount of solid matter in the samples and the Gx-curve,

6.   Device according to the preceding claim, characterised in that it comprises means in order to determine the amounts of a constituent in the samples and means (3) for calculating the granular differentiation starting with the granutometry and these amounts.

7.   Device according to either one of the claims 5 and 6, characterised in that it comprises a pump (9) which is mounted in the supply pipe (8) and is controlled by a control device (10) in function of the pressure in the supply pipe (8) measured by a pressure meter (11) mounted there on.

8.   Device according to any one of the claims 5 to 7, characterised in that the means for calculating (3) comprise a microprocessor.

9.   Device according to any one of the claims 5 to 8, characterised in that the receptacle (1) is a mixing tank and it comprises a stirring mechanism (7) which is disposed in the mixing tank (1).

**Patentansprüche**

1.   Verfahren zur Ermittlung der äquivalenten hydrodynamischen Körnung eines Materials mittels Hydrozyklon-Abscheidung, gemäß welchen Verfahrens eine Suspension des Materials aus einem Gefäß (1) einem Hydrozyklon (2) mit einer Oberstromleitung (13) und einer Unterstromleitung (12) zugeführt wird, dadurch gekennzeichnet, daß nur ein einziger Hydrozyklon (2) verwendet wird, dessen Unterstrom man zum Gefäß (1) zurücklenkt, ein bestimmtes Probevolumen zu bestimmten Zeitpunkten aus dem Oberstrom entnommen wird, die Proben getrocknet und gewogen werden, und die Körnung berechnet wird ausgehend von der gesamten festen Masse, die dem Gefäß während der Probeentnahme zugeführt wurde, der Massenbilanz jeder Probe und der Wahrscheinlichkeit, daß ein Partikel mit Korngröße x sich im Unterstrom befindet, wie von der G(x)-Kurve des Hydrozyklons für das spezifische Material dargestellt.

2.   Verfahren gemäß Anspruch 1, dadurch gekennzeichnet, daß die Körnung berechnet ist gemäß der folgenden Gleichung:

$$M_x(t_e) = m_0(x)V(1-e^{-kxt_e}),$$

worin: $kx = (Q_{in}+Q_r)(1/V)(1-G/x))$, und

$M_x(t_e)$ die gesamte Masse an fester Materie ist, die während der Zeit der Probeentnahme dem Gefäß zugeführt wurde, und somit am Ende des Tests,

$m_0(x)$ die gesuchte Ausgangsmasse der Trockenmasse mit Korngröße x im Gefäß ist

$V$ das Volumen des Gefäßes ist

$Q_{in}$ die dem Mischtank zugeführte Wasserdurchflußmenge ist

$Q_r$ die Durchflußmenge in der Unterstromleitung ist.

3. Verfahren zur Ermittlung der Korndifferenzierung eines Bestandteils in einem Material, das ist die Verteilung dieses Bestandteils über die verschiedenen Korngrößenanteile, dadurch gekennzeichnet, daß die Körnung berechnet ist gemäß dem Verfahren von einem der vorangehenden Ansprüche, die Mengen dieses Bestandteils in den entnommenen Proben gemessen werden, und ausgehend von diesen Mengen und der Körnung die Korndifferenzierung für diesen Bestandteil berechnet wird.

4. Verfahren gemäß einem der vorangehenden Ansprüche, dadurch gekennzeichnet, daß die Körnung berechnet wird, indem eine Massenbilanz für das Gefäß (1) gemacht wird und eine Massenbilanz für jede Probe gemacht wird.

5. Vorrichtung zur Verwirklichung des Verfahrens gemäß einem der vorangehenden Ansprüche, umfassend ein Gefäß (1) für eine Mischung des zu messenden Materials und Flüssigkeit, einen Hydrozyklon (2) mit einer spezifischen Gx-Kurve, eine Oberstromleitung (13) und eine Unterstromleitung (12) und eine Zufuhrleitung (8) zwischen dem Gefäß (1) und dem Einlaß des Hydrozyklons (2), dadurch gekennzeichnet, daß sie einen einzigen Hydrozyklon (2) umfaßt, dessen Unterstromleitung (12) mit dem Gefäß (1) verbunden ist, und Mittel zur Entnahme von Proben aus dem Oberstrom in bekannten Zeitabständen, und Mittel (3) zur Berechnung der Körnung auf Basis der Menge an fester Materie in den Proben und der Gx-Kurve.

6. Vorrichtung gemäß dem vorangehenden Anspruch, dadurch gekennzeichnet, daß sie Mittel zur Ermittlung der Menge eines Bestandteils in den Proben umfaßt und Mittel (3) zur Berechnung der Korndifferenzierung, ausgehend von der Körnung und diesen Mengen.

7. Vorrichtung gemäß einem der Ansprüche 5 und 6, dadurch gekennzeichnet, daß sie eine Pumpe (9) umfaßt, die in der Zufuhrleitung (8) montiert ist und gesteuert wird von einer Steuervorrichtung (10) in Funktion des Drucks in der Zufuhrleitung (8), gemessen von einem darauf montierten Manometer (11).

8. Vorrichtung gemäß einem der Ansprüche 5 bis 7, dadurch gekennzeichnet, daß die Mittel zum Berechnen (3) einen Mikroprozessor umfassen.

9. Vorrichtung gemäß einem der Ansprüche 5 bis 8, dadurch gekennzeichnet, daß das Gefäß (1) ein Mischtank ist und es einen Rührmechanismus (7) umfaßt, der im Mischtank (1) untergebracht ist.

**Revendications**

1. Procédé de détermination de la granulométrie hydrodynamique équivalente d'une matière au moyen d'une séparation via un hydrocyclone, procédé conformément auquel on ajoute une suspension de la matière provenant d'un récipient (1) à un hydrocyclone (2) muni d'une conduite pour l'écoulement amont (13) et d'une conduite pour l'écoulement aval (12), caractérisé en ce qu'on n'utilise qu'un seul hydrocyclone (2) dont l'écoulement aval est recyclé dans le récipient (1) , on prélève un volume d'échantillon bien défini de l'écoulement amont à des intervalles bien définis, on sèche les échantillons prélevés et on les pèse, et on calcule la granulométrie à partir de la masse totale de produits solides alimentés dans le récipient au cours du prélèvement d'échantillons, à partir de l'équilibre de masse de chaque échantillon et à partir de la probabilité de la présence d'une particule à granulométrie x dans l'écoulement aval, comme représenté par la courbe G(x) de l'hydrocyclone pour la matière spécifique.

2. Procédé selon la revendication 1, caractérisé en ce qu'on calcule la granulométrie en se référant à l'équation ci-après:

$$M_x(t_e) = m_0(x)V(1\text{-}e^{-kxte}),$$

dans laquelle: $kx=(Q_{in}+Q_r)(1/V)(1-G(x))$, et

$N_x(t_e)$    représente la masse totale des produits solides alimentés dans le récipient tout au long du prélèvement d'échantillons, partant à la fin de l'essai,

$m_0(x)$    représente la masse initiale recherchée de matière sèche possédant la granulométrie x dans le récipient,

$V$    représente le volume du récipient,

$Q_{in}$    représente l'écoulement d'eau alimenté dans le réservoir de mélange,

$Q_r$    représente l'écoulement dans la conduite pour l'écoulement aval.

3. Procédé de détermination de la différenciation granulaire d'un constituant dans une matière, c'est-à-dire la distribution de ce constituant parmi les diverses fractions granulométriques, caractérisé en ce qu'on calcule la granulométrie conformément au procédé selon l'une quelconque des revendications précédentes, on mesure les quantités de ce constituant dans les échantillons prélevés et, à partir de ces quantités et de la granulométrie, on calcule la différenciation granulaire pour ce constituant.

4. Procédé selon l'une quelconque des revendications précédentes, caractérisé en ce qu'on calcule la granulométrie en établissant un équilibre de masse pour le récipient (1) et en établissant un équilibre de masse pour chaque échantillon.

5. Dispositif pour la mise en oeuvre du procédé selon l'une quelconque des revendications précédentes, comprenant un récipient (1) pour un mélange de la matière à mesurer et d'un liquide, un hydrocyclone (2) possédant une courbe Gx spécifique, une conduite pour l'écoulement amont (13) et une conduite pour l'écoulement aval (12), ainsi qu'une conduite d'alimentation (8) entre le récipient (1) et l'entrée de l'hydrocyclone (2), caractérisé en ce qu'il comprend un seul hydrocyclone (2) dont la conduite pour l'écoulement aval (12) est reliée au récipient (1), ainsi que des moyens pour prélever des échantillons de l'écoulement amont à des intervalles connus et des moyens (3) pour calculer la granulométrie sur base de la quantité de produits solides dans les échantillons et sur base de la courbe Gx.

6. Dispositif selon la revendication précédente, caractérisé en ce qu'il comprend des moyens pour déterminer les quantités d'un constituant dans les échantillons et des moyens (3) pour calculer la différenciation granulaire à partir de la granulométrie et de ces quantités.

7. Dispositif selon l'une quelconque des revendications 5 et 6, caractérisé en ce qu'il comprend une pompe (9) qui est montée dans la conduite d'alimentation (8) et qui est commandée par un dispositif de commande (10) en fonction de la pression régnant dans la conduite d'alimentation (8), mesurée à l'aide d'un dispositif de mesure de la pression (11) monté sur cette dernière.

8. Dispositif pour la mise en oeuvre du procédé selon l'une quelconque des revendications 5 à 7, caractérisé en ce que les moyens de calcul (3) comprennent un microprocesseur.

9. Dispositif pour la mise en oeuvre du procédé selon l'une quelconque des revendications 5 à 8, caractérisé en ce que le récipient (1) est un réservoir de mélange et il comprend un mécanisme d'agitation (7) qui est disposé dans le réservoir de mélange (1).

*Fig. 1*

*Fig. 2*

*Fig. 3*

*Fig. 4*

*Fig. 5*

# Fig. 6